# EUROPEAN PATENT APPLICATION

(11) **EP 0 823 825 A2**
(43) Date of publication of application: **11.02.1998**
(21) Application number: 97305707.8
(22) Date of filing: 29.07.1997
(51) Int. Cl.: H04N 9/79

(54) **Recording format setting apparatus for video recording system**

(30) Priority: 07.08.1996 KR 9632907
(71) Applicant: Samsung Electronics Co., Ltd., Suwon City, Kyungki-do (KR)
(72) Inventor: Suh, Yong-Bum, Suwon-city, Kyungki-do (KR)
(74) Representative: Chugg, David John

(57) **Abstract**

A recording format setting apparatus for use in a video recording system judges whether a helper signal exists in a received video signal. In the case of the video signal having a helper signal, the video signal is automatically recorded into a 16:9 wide recording format. In the case of a video signal having no helper signal, an aspect ratio is detected. Then, if an old movie video signal of a 16:9 aspect ratio is received, it is recorded into a 16:9 wide recording format, while in the case of a 4:3 general video signal, it is recorded into a general recording format. Thus, the video signal can be recorded according to an aspect ratio thereof.

## Description

The present invention relates to a video recording system, and more particularly, to a recording format setting apparatus for use in a video recording system which can set a recording format according to an aspect ratio of a received broadcasting signal to thereby record the broadcasting signal.

A video signal having a 16:9 wide pattern which is currently broadcast in Europe is roughly divided into two types, such as a PAL PLUS which includes a help signal in a predetermined section and an old movie signal which does not include the helper signal.

When a video signal of a wide pattern having a 16:9 screen aspect ratio is displayed in a video reproducing apparatus having a 4:3 screen aspect ratio, black bars appear over and above of the displayed video signal. That is, both a PAL PLUS signal which includes a help signal and an old movie signal which does not include the helper signal are displayed in the form that black bars appear over and above. However, when a helper-signal-contained PAL PLUS signal having a 16:9 aspect ratio is recorded in a video recording apparatus having a 4:3 screen ratio, it is recorded into a wide format of a 16:9 aspect ratio by the helper signal, while an old movie signal which does not include a helper signal is recorded into a general format of a 4:3 aspect ratio.

With a view to solve or reduce the above problems, it is an aim of embodiments of the present invention to provide a recording format setting apparatus for use in a video recording system which judges whether or not a helper signal is included in a video signal, and detects an aspect ratio of a video signal which does not include a helper signal, so that a received old movie video signal of a 16:9 aspect ratio is recorded into a 16:9 wide recording format, and a received general video signal of a 4:3 aspect ratio is recorded into a general recording format.

According to a first aspect of the present invention, there is provided a recording format setting apparatus for use in a video recording system, the recording format setting apparatus comprising: a demodulator for demodulating a received video signal; a recorder for recording the video signal demodulated in the demodulator; an aspect ratio detector for judging an aspect ratio of the received video signal using information loaded in a predetermined section of the video signal demodulated in the demodulator; and a control unit for judging whether or not a helper signal exists in the received video signal and controlling the recorder to record the received video signal into a corresponding recording format according to a detection result of the aspect ratio detector.

Preferably, said aspect ratio detector detects a horizontal sync signal loaded in a predetermined section of the video signal applied from the demodulator, and detects whether or not data exists between the detected horizontal sync signal and the start point of the video data, to accordingly judge an aspect ratio.

Preferably, said aspect ratio detector adds the current video signal applied from said demodulator and the video signal delayed for the predetermined time, performs filtering the added result, and detects a DC value of the filtered signal.

Said aspect ratio detector preferably comprises: a delay for delaying the video signal applied from the demodulator; an adder for adding the previous video signal delayed in the delay and the current video signal applied from the demodulator; a filter for filtering the added video signal according to the rectangular pulse having a predetermined duty; an integrator for integrating the filtered signal supplied from the filter and outputting a DC value; and a comparator for pre-storing a DC reference value, and outputting a wide recording format signal to record the video signal into a 16:9 recording format if the DC value applied from the integrator is smaller than the pre-stored DC reference value, while if the former is larger than the latter, outputting a general recording format signal to record the video signal into a 4:3 general recording format.

Preferably, said controller outputs a 16:9 wide recording format signal to said recorder if a helper signal exists in a predetermined section of the video signal applied from the demodulator .

For a better understanding of the invention, and to show how embodiments of the same may be carried into effect, reference will now be made, by way of example, to the accompanying diagrammatic drawings, in which:
Figure 1 is a block diagram showing a recording format setting apparatus for use in a video recording system according to a preferred embodiment of the present invention; and
Figure 2 is a flow-chart diagram for explaining the operation of the Figure 1 apparatus.

A preferred embodiment of the present invention will be described in detail with reference to the accompanying drawings.

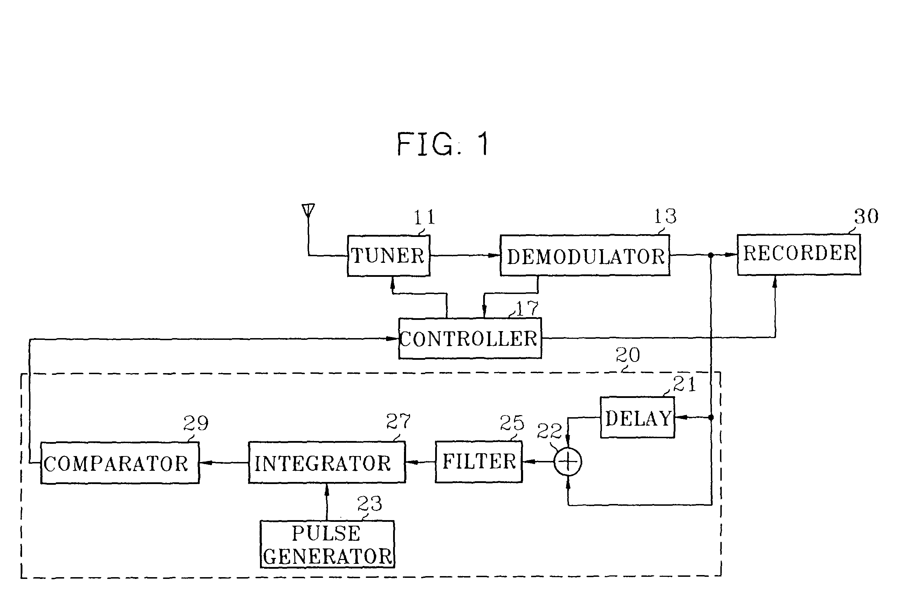

In Figure 1, a recording format setting apparatus for use in a video recording system includes a tuner 11 for receiving a broadcast signal via an antenna. A demodulator 13 demodulates the broadcast signal applied from the tuner 11 and outputs the demodulated signal to a recorder 30 and an aspect ratio detector 20. Also, the recording format setting apparatus according to the invention includes a controller 17 for outputting a tuning control signal to the tuner 11 and outputting a recording format setting signal to the recorder 30. The aspect ratio detector 20 includes a delay 21 for delaying the video signal applied from the demodulator 13 for a predetermined time and outputting the delayed result. An adder 22 adds the previous video signal delayed in the delay 21 for a predetermined time and the current video signal applied from the demodulator 13 and outputs the added result to a filter 25. Also, a pulse generator 23 is connected to the filter 25. The pulse generator 23 applies a rectangular pulse having a predetermined duty to the filter 25. The filter 25 performs filtering of the video signal applied from the adder 22 according to the rectangular pulse applied from the pulse generator 23. An integrator 27 is connected to the output of the filter 25. The integrator 27 integrates the filtered signal supplied from the filter 25. A comparator 29 is connected to the output of the integrator 27. The comparator 29 receives the integrated signal, compares the received signal with a predetermined DC reference value, and outputs the comparison result to the controller 17. The controller 17 outputs a recording format setting signal to the recorder 30 having a servo unit and a video signal processor according to the comparison result information applied from the comparator 29.

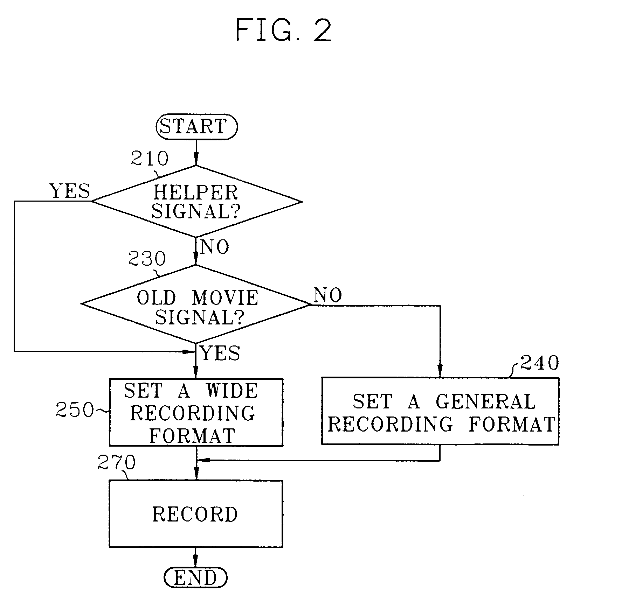

Referring to Figures 1 and 2, the operation of the recording format setting apparatus will be described in more detail.

The tuner 11 receives the broadcast signal via the antenna. The demodulator 13 demodulates the audio and video signal in the broadcast signal applied from the tuner 11 and outputs the demodulated signal. The controller 17 receives the demodulated video signal and judges whether a helper signal exists in the received demodulated video signal (step 210). If the helper signal exists, a wide recording format signal is output to the recorder 30, to record the demodulated video signal into a wide recording format of a 16:9 aspect ratio (step 250). The recorder 30 records the video signal in a 16:9 wide recording format according to the wide recording format signal from the controller 17.

Meanwhile, if a helper signal does not exist in the demodulated video signal, an aspect ratio of the demodulated video signal is detected (step 230). That is, it is detected in step 230 whether the video signal is a general video signal of a 4:3 aspect ratio or an old movie video signal of a 16:9 aspect ratio having no helper signal. If the video signal is the general video signal of the 4:3 aspect ratio as a detection result, a video recording format is set to a general video recording format (step 240), while if the video signal is the old movie video signal of the 16:9 aspect ratio, a video recording format is set to a wide recording format (step 250). Then, a recording operation is performed in step 270.

Such an aspect ratio detection is performed via the aspect ratio detector 20. The aspect ratio detector 20 detects a horizontal sync signal loaded in a predetermined section of the video signal applied from the demodulator 13, and judges an aspect ratio according to a distance between the detected horizontal sync signal and the start point of the video data. The old movie video signal is longer than the 4:3 general video signal in the distance between the horizontal sync signal and the start point of the video data. The old movie video signal has no signal between the horizontal sync signal and the start point of the video data, which causes a black bar to show up on a display screen. Therefore, the aspect ratio detector 20 detects whether or not data exists between the horizontal sync signal and the start point of the video data, and judges whether the video signal is a 16:9 old movie video signal or a 4:3 general video signal. Hereinbelow, the operation of the aspect ratio detector 20 will be described in detail.

The delay 21 in the aspect ratio detector 20 delays the video signal applied from the demodulator 13 for a predetermined time and outputs the delayed result to the adder 22. The adder 22 adds the previous video signal delayed in the delay 21 and the current video signal applied from the demodulator 13. The filter 25 performs filtering of the video signal applied from the adder 22 according to the rectangular pulse having a predetermined duty applied from the pulse generator 23. The integrator 27 integrates the filtered video signal and outputs the integrated result to the comparator 29. The comparator 29 pre-stores a DC reference value, receives the integrated signal, compares the received signal with a predetermined DC reference value, and outputs the control signal to the controller 17. That is, if the integration value of the video signal is larger than the reference value, it is judged that the currently received video signal is a 4:3 general video signal, to then output a general recording format signal to the controller 17. If the integration value of the video signal is smaller than the reference value, it is judged that the currently received video signal is a 16:9 old movie video signal, to then output a 16:9 wide recording format signal to the controller 17. The controller 17 controls the recorder 30 according to a wide recording format signal or a general recording format signal applied from the comparator 29. The recorder 30 records the video signal into a 4:3 or 16:9 recording format under control of the controller 17.

As described above, the recording format setting apparatus for use in a video recording system judges whether a helper signal exists in a received video signal. In the case of a 4:3 general video signal having no helper signal, it is recorded into a 4:3 general recording format, while in the case of a 16:9 old movie video signal having no helper signal, it is recorded into a 16:9 wide recording format as in the case of a video signal having a helper signal.

While only certain embodiments of the invention have been specifically described herein, it will be apparent that numerous modifications may be made thereto without departing from the scope of the invention.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A recording format setting apparatus for use in a video recording system, the recording format setting apparatus comprising:
a demodulator (13) for demodulating a received video signal;
a recorder (30) for recording the video signal demodulated in the demodulator (13);
an aspect ratio detector (20) for judging an aspect ratio of the received video signal using information loaded in a predetermined section of the video signal demodulated in the demodulator; and
a control unit (17) for judging whether or not a helper signal exists in the received video signal and controlling the recorder to record the received video signal into a corresponding recording format according to a detection result of the aspect ratio detector and the helper signal existence judgement result.

2. The recording format setting apparatus for use in a video recording system according to claim 1, wherein said aspect ratio detector (20) detects a horizontal sync signal loaded in a predetermined section of the video signal applied from the demodulator (13), and detects whether or not data exists between the detected horizontal sync signal and the start point of the video data, to accordingly judge an aspect ratio.

3. The recording format setting apparatus for use in a video recording system according to claim 1 or 2, wherein said aspect ratio detector (20) adds the current video signal applied from said demodulator (13) and the video signal delayed for the predetermined time, performs filtering the added result, and detects a DC value of the filtered signal.

4. The recording format setting apparatus for use in a video recording system according to claim 1, 2 or 3, wherein said aspect ratio detector (20) comprises:
a delay (21) for delaying the video signal applied from the demodulator (13);
an adder (22) for adding the previous video signal delayed in the delay (21) and the current video signal applied from the demodulator (13);
a filter (25) for filtering the added video signal according to the rectangular pulse having a predetermined duty;
an integrator (27) for integrating the filtered signal supplied from the filter (25) and outputting a DC value; and
a comparator (29) for pre-storing a DC reference value, and outputting a wide recording format signal to record the video signal into a 16:9 recording format if the DC value applied from the integrator (27) is smaller than the pre-stored DC reference value, while if the former is larger than the latter, outputting a general recording format signal to record the video signal into a 4:3 general recording format.

5. The recording format setting apparatus for use in a video recording system according to claim 1, wherein said controller (17) outputs a 16:9 wide recording format signal to said recorder (30) if a helper signal exists in a predetermined section of the video signal applied from the demodulator (13).
